# EUROPÄISCHE PATENTANMELDUNG

(11) **EP 3 461 162 A1**
(43) Veröffentlichungstag der Anmeldung: **27.03.2019**
(21) Anmeldenummer: 17192424.4
(22) Anmeldetag: 21.09.2017
(51) Int. Cl.: H04W 12/06, H04W 12/04, H04L 29/08, H04L 29/06, H04W 4/00, G05B 19/00, H04L 9/32, H04W 84/18

(54) **VERFAHREN, KOMMUNIKATIONSPARTNER UND SYSTEM ZUM RECHNERGESTÜTZTEN ERZEUGEN EINER KRYPTOGRAPHISCH GESCHÜTZTEN KOMMUNIKATIONSVERBINDUNG ZWISCHEN EINEM ERSTEN KOMMUNIKATIONSPARTNER UND EINEM ZWEITEN KOMMUNIKATIONSPARTNER**

(71) Anmelder: Siemens Aktiengesellschaft, 80333 München (DE)
(72) Erfinder: Fischer, Kai, 85598 Baldham (DE); Heintel, Markus, 81377 München (DE)

(57) **Zusammenfassung**

Mit der Erfindung ist es insbesondere möglich eine benutzerfreundliche nachträgliche Authentifizierung einer Kommunikationsverbindung (z. B. einer Bluetooth-Verbindung) beispielsweise zwischen einem Wartungsgerät (z. B. erster Kommunikationspartner) und einem Feldgerät (z. B. zweiter Kommunikationspartner) über eine Anwendungsverbindung zu realisieren. Es müssen für die Sicherheit der Kommunikationsverbindung (z. B. Bluetooth-Sicherheit) insbesondere keine Pins oder Ziffernfolgen konfiguriert, verteilt, eingegeben oder angezeigt werden. Die Authentifizierung erfolgt auf Basis eines bereits existierenden ersten Authentifikationsdatensatzes (der z. B. ein Passwort umfasst), der insbesondere mit Merkmalen der Bluetooth-Verbindung (z. B. dem Code) verknüpft wird. Die Bluetooth-Verbindung wird somit insbesondere nachträglich über die Anwendungsverbindung authentifiziert und an die Anwendungsverbindung gebunden.

## Beschreibung

Die Erfindung bezieht sich auf ein Verfahren, Kommunikationspartner und System zum rechnergestützten Erzeugen einer kryptographisch geschützten Kommunikationsverbindung zwischen einem ersten Kommunikationspartner und einem zweiten Kommunikationspartner.

In der Automatisierungsindustrie wird eine Vielzahl industrieller Komponenten wie z. B. Feldgeräte im Anlagennetz verbaut. Die Feldgeräte arbeiten hierbei als Sensor zur Datenerfassung und/oder als Aktor zur Steuerung physikalischer Komponenten. Sie sind häufig verstreut im Anlagennetz oder an Positionen installiert, die eine Bedienung über eine lokale Schnittstelle (z.B. Tastatur, Display, USB) erschweren bzw. unmöglich machen. Aus diesem Grund werden Feldgeräte mit einer Funkschnittstelle erweitert, die es erlaubt, dass ein Service-Techniker die Geräte mit einem räumlichen Abstand bedienen bzw. auslesen kann. Als Funkschnittstelle/drahtloses Netzwerk/drahtlose Kommunikationsverbindung wird bevorzugt Bluetooth oder Bluetooth Low Energy eingesetzt.

Eine Aufgabe der vorliegenden Erfindung ist es, ein Verfahren, Kommunikationspartner und ein System zum rechnergestützten Erzeugen einer kryptographisch geschützten Kommunikationsverbindung zwischen einem ersten Kommunikationspartner und einem zweiten Kommunikationspartner bereitzustellen.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Ein erster Aspekt der Erfindung betrifft ein Verfahren zum rechnergestützten Erzeugen einer kryptographisch geschützten Kommunikationsverbindung, insbesondere eines drahtlosen Kommunikationskanals wie Bluetooth, zwischen einem ersten Kommunikationspartner und einem zweiten Kommunikationspartner mit folgenden Verfahrensschritten:
- Aufbauen (110) einer ersten Kommunikationsverbindung zwischen dem ersten Kommunikationspartner und dem zweiten Kommunikationspartner, wobei
   - der erste Kommunikationspartner einen ersten Code erzeugt und der zweite Kommunikationspartner einen zweiten Code erzeugt;
- Erzeugen und Speichern (120) eines ersten Verknüpfungsdatensatzes durch den ersten Kommunikationspartner und Erzeugen und Speichern eines zweiten Verknüpfungsdatensatzes durch den zweiten Kommunikationspartner, wobei
   - der erste Verknüpfungsdatensatz eine Verknüpfung des ersten Codes mit einem ersten anwendungsspezifischen Authentifikationsdatensatz des ersten Kommunikationspartners umfasst,
   - der zweite Verknüpfungsdatensatz eine Verknüpfung des zweiten Codes mit einem zweiten anwendungsspezifischen Authentifikationsdatensatz des zweiten Kommunikationspartners umfasst;
- Aufbauen (130) einer Anwendungssitzung über die erste Kommunikationsverbindung;
- wechselseitiges Authentifizieren (140) des ersten Kommunikationspartners und des zweiten Kommunikationspartners mittels des ersten Verknüpfungsdatensatzes und des zweiten Verknüpfungsdatensatzes über die Anwendungssitzung;
- Bestätigen (150) der ersten Kommunikationsverbindung als kryptographisch geschützte und authentifizierte Kommunikationsverbindung, wenn das wechselseitige Authentifizieren erfolgreich ist.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem "Prozessor" kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Unter "Bereitstellen" kann im Zusammenhang mit der Erfindung beispielsweise ein Laden oder ein Speichern von Daten oder Datensätzen verstanden werden. Unter "Bereitstellen" kann beispielsweise auch ein Übertragen (oder ein Senden oder ein Übermitteln) von einem Kommunikationspartner zu einem anderen Kommunikationspartner verstanden werden.

Unter einer "Prüfsumme" kann im Zusammenhang mit der Erfindung beispielsweise eine kryptographische Prüfsumme oder kryptographischer Hash bzw. Hashwert verstanden werden, die insbesondere mittels einer kryptographischen Hashfunktion gebildet oder berechnet werden. Weiterhin kann darunter insbesondere auch eine digitale Signatur oder ein kryptographischer Nachrichtenauthentisierungscode verstanden werden.

Unter einem "Code" kann im Zusammenhang mit der Erfindung beispielsweise ein numerischer, alphabetischer oder alphanumerischer Code oder Zeichenfolge verstanden werden. Dieser Code kann beispielsweise auch aus Merkmalen einer Kommunikationsverbindung (z. B. ein ausgehandelter Schlüssel der Kommunikationsverbindung, Identifizierer der Kommunikationspartner, eine vereinbarten Identifizierer für die Kommunikationsverbindung) erzeugt werden.

Mit der Erfindung ist es insbesondere möglich eine benutzerfreundliche nachträgliche Authentifizierung einer Kommunikationsverbindung (z. B. einer Bluetooth-Verbindung) beispielsweise zwischen einem Wartungsgerät (z. B. erster Kommunikationspartner) und einem Feldgerät (z. B. zweiter Kommunikationspartner) über eine Anwendungsverbindung zu realisieren. Es müssen für die Sicherheit der Kommunikationsverbindung (z. B. Bluetooth-Sicherheit) insbesondere keine Pins oder Ziffernfolgen konfiguriert, verteilt, eingegeben oder angezeigt werden. Die Authentifizierung erfolgt auf Basis eines bereits existierenden ersten Authentifikationsdatensatzes (der z. B. ein Passwort umfasst), der insbesondere mit Merkmalen der Bluetooth-Verbindung (z. B. dem Code) verknüpft wird. Die Bluetooth-Verbindung wird somit insbesondere nachträglich über die Anwendungsverbindung authentifiziert und an die Anwendungsverbindung gebunden.

Bei einer ersten Ausführungsform des Verfahrens werden die jeweiligen Verknüpfungsdaten durch den jeweiligen Kommunikationspartner gespeichert.

Das Verfahren ist dahingehend vorteilhaft, um insbesondere einen erneuten Verbindungsaufbau zu beschleunigen, da hierdurch beispielsweise die jeweiligen Verknüpfungsdatensätze nicht erneut erzeugt werden müssen.

Bei einer weiteren Ausführungsform des Verfahrens wird für einen erneuten Verbindungsaufbau über die geschützte Kommunikationsverbindung weiteres Schlüsselmaterial ausgetauscht.

Das Verfahren ist dahingehend vorteilhaft, um insbesondere beim nächsten Verbindungsaufbau eine Verschlüsselung über benutzerdefiniertes Schlüsselmaterial zu realisieren und dadurch beispielsweise eine höhere Sicherheit oder eine Sicherheit zu realisieren, die sich an den Benutzerbedürfnissen orientiert. Beispielsweise Berechtigungen nur noch für bestimmte Systemkommandos zu erlauben. Das Schlüsselmaterial kann dann beispielsweise in den entsprechenden Authentifikationsdatensätzen gespeichert werden.

Bei einer weiteren Ausführungsform des Verfahrens wird das jeweilige Verknüpfen mittels einer Prüfsumme über den jeweiligen Code und dem jeweiligen Authentifikationsdatensatz realisiert.

Das Verfahren ist dahingehend vorteilhaft, um insbesondere eine Größe der Verknüpfungsdaten möglichst gering zu halten. Alternativ kann das Verknüpfen beispielsweise auch über eine XOR Operation mit den entsprechenden Daten realisiert werden.

Bei einer weiteren Ausführungsform des Verfahrens sind die Codes für die Kommunikationspartner identisch.

Das Verfahren ist dahingehend vorteilhaft, um insbesondere das Verfahren möglichst einfach zu realisieren.

Bei einer weiteren Ausführungsform des Verfahrens wird zum wechselseitigen Authentifizieren ein Authentifizierungsprotokoll wie SRP oder SCRAM unter Anwendung der Verknüpfungsdaten verwendet.

Das Verfahren ist dahingehend vorteilhaft, um insbesondere das Authentifizieren möglichst einfach und sicher zu realisieren. Hierzu können beispielsweise Passwörter verwendet werden, deren Korrektheit beispielsweise durch den zweiten Kommunikationspartner überprüft wird. Hier werden beispielsweise die Verknüpfungsdaten verwendet. Bei SRP und SCRAM werden diese Verknüpfungsdaten beispielsweise auch nicht direkt ausgetauscht, sondern die Korrektheit wird insbesondere durch kryptographische Operationen bestätigt.

Bei einer weiteren Ausführungsform des Verfahrens wird beim Aufbauen der ersten Kommunikationsverbindung kryptographisches Schlüsselmaterial ausgetauscht, um die erste Kommunikationsverbindung zu verschlüsseln.

Bei einer weiteren Ausführungsform des Verfahrens sind die Codes für die Kommunikationspartner unterschiedlich.

Bei einer weiteren Ausführungsform des Verfahrens wird mit einem jeweiligen Authentifikationsdatensatz eine Berechtigungsstufe gegenüber einem der Kommunikationspartner zugeordnet.

Das Verfahren ist dahingehend vorteilhaft, um insbesondere anhand der anwendungsspezifischen Authentifikationsdatensätze bestimmte Funktionen beispielsweise beim ersten oder zweiten Kommunikationspartner freizuschalten. Insbesondere könnte hierbei beispielsweise beim zweiten Kommunikationspartner ein Zugriff auf bestimmte Gerätefunktionen (z. B. Herunterfahren, Neustarten) erlaubt werden. Dies kann beispielsweise dadurch realisiert werden, dass das Passwort, das beispielsweise im ersten anwendungsspezifischen Authentifikationsdatensatz umfasst ist, mit den Berechtigungsstufen aussoziiert bzw. diesen zugeordnet ist. Diese Zuordnung kann beispielsweise im zweiten anwendungsspezifischen Authentifikationsdatensatz gespeichert sein.

Bei einer weiteren Ausführungsform des Verfahrens ist der zweite Kommunikationspartner ein Feldgerät und der erste Kommunikationspartner ist ein Wartungsgerät für das Feldgerät, wobei insbesondere mittels der anwendungsspezifischen Authentifikationsdatensätze eine Berechtigungsstufe gegenüber dem zweiten Kommunikationspartner freigegeben wird.

Das Verfahren ist dahingehend vorteilhaft, um insbesondere anhand der anwendungsspezifischen Authentifikationsdatensätze (z. B. indem der erste anwendungsspezifische Authentifikationsdatensatz ein benutzerspezifisches Passwort umfasst) bestimmte Funktionen beispielsweise bei der Wartung des Feldgerätes für einen Servicetechniker freizuschalten. Dies können beispielsweise ein Herunterfahren oder ein Neustarten des Feldgerätes sein. Hierdurch wird insbesondere für den ersten Kommunikationspartner auf/bei dem zweiten Kommunikationspartner die Berechtigungsstufe freigegeben. Insbesondere könnte hierbei beispielsweise beim zweiten Kommunikationspartner ein Zugriff auf bestimmte Gerätefunktionen (z. B. Herunterfahren, Neustarten) erlaubt werden.

Gemäß einem weiteren Aspekt betrifft die Erfindung einen ersten Kommunikationspartner aufweisend:
- ein erstes Kommunikationsmodul (21) zum Aufbauen einer ersten Kommunikationsverbindung mit einem zweiten Kommunikationspartner, wobei
   - der erste Kommunikationspartner einen ersten Code erzeugt;
- ein erstes Anwendungsmodul (22) zum Aufbauen einer Anwendungssitzung über die erste Kommunikationsverbindung;
- ein erstes Speichermodul (23) zum Speichern eines ersten Verknüpfungsdatensatzes, wobei
   - der erste Verknüpfungsdatensatz eine Verknüpfung des ersten Codes mit einem ersten anwendungsspezifischen Authentifikationsdatensatz des ersten Kommunikationspartners umfasst;
- ein erstes Authentifizierungsmodul (24) zum wechselseitigen Authentifizieren des ersten Kommunikationspartners und des zweiten Kommunikationspartners mittels des ersten Verknüpfungsdatensatzes;
- ein erstes Sicherheitsmodul (25) zum Bestätigen der ersten Kommunikationsverbindung als kryptographisch geschützte und authentifizierte Kommunikationsverbindung durch die Kommunikationspartner, wenn das wechselseitige Authentifizieren erfolgreich ist.

Bei einer weiteren Ausführungsform des ersten Kommunikationspartners umfasst der erste Kommunikationspartner zumindest ein weiteres Modul oder mehrere weitere Module zur Durchführung des erfindungsgemäßen Verfahrens (oder einer seiner Ausführungsformen) .

Gemäß einem weiteren Aspekt betrifft die Erfindung einen zweiten Kommunikationspartner aufweisend:
- ein zweites Kommunikationsmodul zum Aufbauen einer ersten Kommunikationsverbindung mit einem ersten Kommunikationspartner, wobei
   - der zweite Kommunikationspartner einen zweiten Code erzeugt;
- ein zweites Anwendungsmodul zum Aufbauen einer Anwendungssitzung über die erste Kommunikationsverbindung;
- ein zweites Speichermodul zum Speichern eines zweiten Verknüpfungsdatensatzes, wobei
   - der zweite Verknüpfungsdatensatz eine Verknüpfung des zweite Codes mit einem zweiten anwendungsspezifischen Authentifikationsdatensatz des zweiten Kommunikationspartners umfasst,
- ein zweites Authentifizierungsmodul zum wechselseitigen Authentifizieren des ersten Kommunikationspartners und des zweiten Kommunikationspartners mittels des zweiten Verknüpfungsdatensatzes;
- ein zweites Sicherheitsmodul zum Bestätigen der ersten Kommunikationsverbindung als kryptographisch geschützte und authentifizierte Kommunikationsverbindung durch die Kommunikationspartner, wenn das wechselseitige Authentifizieren erfolgreich ist.

Bei einer weiteren Ausführungsform des zweiten Kommunikationspartners umfasst der zweite Kommunikationspartner zumindest ein weiteres Modul oder mehrere weitere Module zur Durchführung des erfindungsgemäßen Verfahrens (oder einer seiner Ausführungsformen).

Gemäß einem weiteren Aspekt betrifft die Erfindung ein System zum rechnergestützten Erzeugen einer kryptographisch geschützten Kommunikationsverbindung, insbesondere einer drahtlosen Kommunikationsverbindung wie Bluetooth, zwischen Kommunikationspartnern aufweisend:
- einen ersten Kommunikationspartner (z. B. der oben erläuterte erste Kommunikationspartner);
- einen zweiten Kommunikationspartner (z. B. der oben erläuterte zweite Kommunikationspartner);
- eine Netzwerkverbindung zwischen dem ersten Kommunikationspartner und dem zweiten Kommunikationspartner.

Bei einer weiteren Ausführungsform des Systems umfasst das System zumindest ein weiteres Modul oder mehrere weitere Module zur Durchführung des erfindungsgemäßen Verfahrens (oder einer seiner Ausführungsformen).

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass das genannte erfindungsgemäße System und/oder der erste Kommunikationspartner und/oder der zweite Kommunikationspartner erstellt werden.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es das erfindungsgemäße System und/oder den ersten Kommunikationspartner und/oder den zweiten Kommunikationspartner erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung als Sequenzdiagramm;
- Fig. 2: ein zweites Ausführungsbeispiel der Erfindung als erster Kommunikationspartner;
- Fig. 3: ein drittes Ausführungsbeispiel der Erfindung als zweiter Kommunikationspartner;
- Fig. 4: ein drittes Ausführungsbeispiel der Erfindung als System;

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software (komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies expliziert in dem jeweiligen Ausführungsbeispiel genannt sein muss.

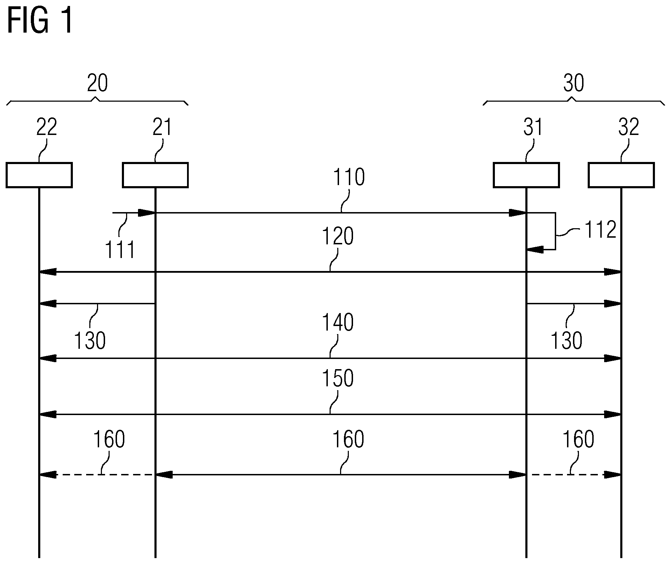

Die Fig. 1 zeigt ein erstes Ausführungsbeispiel der Erfindung als ein Sequenzdiagramm des erfindungsgemäßen Verfahrens.

Das Verfahren ist vorzugsweise rechnergestützt realisiert.

Im Einzelnen wird in diesem Ausführungsbeispiel ein Verfahren zum rechnergestützten Erzeugen einer kryptographisch geschützten Kommunikationsverbindung, insbesondere eines drahtlosen Kommunikationskanals wie Bluetooth, zwischen einem ersten Kommunikationspartner und einem zweiten Kommunikationspartner realisiert.

Vorzugsweise realisiert das Verfahren ein Erzeugen einer authentifizierten und kryptographisch geschützten Kommunikationsverbindung.

Es ist ein erster Kommunikationspartner 20 dargestellt, der beispielsweise ein Wartungsgerät für den zweiten Kommunikationspartner 30 ist.

Der erste Kommunikationspartner 20 kann dabei ein Tablet sein, der ein erstes Anwendungsmodul 22 (z. B. eine Wartungssoftware) und ein erstes Kommunikationsmodul 21, z. B. einen Bluetooth-Chip oder Bluetooth-Modul, umfasst. Die Wartungssoftware kann dabei beispielsweise ein erstes Authentifizierungsmodul für die wechselseitige Authentifizierung umfassen oder das erste Authentifizierungsmodul ist als separates Modul auf dem ersten Kommunikationspartner 20 realisiert.

Der zweite Kommunikationspartner 30 kann ein Feldgerät sein, der ein zweites Anwendungsmodul 32 (z. B. eine Firmware des Feldgerätes) und ein zweites Kommunikationsmodul 31, z. B. einen Bluetooth-Chip oder Bluetooth-Modul, umfasst. Die Firmware kann dabei beispielsweise ein zweites Authentifizierungsmodul für die wechselseitige Authentifizierung umfassen oder das zweite Authentifizierungsmodul ist als separates Modul auf dem zweiten Kommunikationspartner 30 realisiert. Die Kommunikationspartner sind über ein Kommunikationsnetzwerk oder eine Kommunikationsverbindung miteinander kommunikativ verbunden. Die Kommunikationsverbindung ist vorzugsweise drahtlos und über Bluetooth realisiert.

Im Einzelnen umfasst das Verfahren einen ersten Verfahrensschritt zum Aufbauen 110 einer ersten Kommunikationsverbindung zwischen dem ersten Kommunikationspartner und dem zweiten Kommunikationspartner, wobei der erste Kommunikationspartner einen ersten (kommunikationsverbindungsspezifischen) Code erzeugt 111 und der zweite Kommunikationspartner einen zweiten (kommunikationsverbindungsspezifischen) Code erzeugt 112.

Insbesondere können die erzeugten Codes, die zur gegenseitigen Authentifikation der ersten Kommunikationsverbindung genutzt werden, können in diesem Verfahrensschritt aber insbesondere nicht geprüft werden.

Die Codes selber enthalten insbesondere bereits kommunikationsverbindungsspezifische Merkmale (z. B. ein ausgehandelter Schlüssel der Kommunikationsverbindung, Identifizierer der Kommunikationspartner, eine vereinbarten Identifizierer für die Kommunikationsverbindung).

Unter kommunikationsverbindungsspezifisch ist dabei insbesondere zu verstehen, dass der entsprechende Code spezifisch für die erste Kommunikationsverbindung erzeugt wurde.

Der erste Kommunikationspartner 20 baut beispielsweise mit dem zweiten Kommunikationspartner 30 die erste Kommunikationsverbindung auf. Mit anderen Worten wird die erste Kommunikationsverbindung beispielsweise durch den ersten Kommunikationspartner initiiert.

Dies kann beispielsweise auf von Basis Bluetooth und des Numeric Comparison Association Models realisiert werden, das im Bluetooth Standard 4.2 erläutert ist. Jedoch anstelle die entsprechenden Codes (im Stand als "6 digit numbers" bezeichnet) auszugeben und visuell zu vergleichen, werden diese durch den jeweiligen Kommunikationspartner gespeichert.

Zusätzlich können beim Verbindungsaufbau auch kryptographische Schlüssel ausgetauscht werden, um die erste Kommunikationsverbindung zu verschlüsseln. Hierfür kann beispielsweise das Diffie-Hellman Verfahren genutzt werden.

Vorzugsweise ist die erste Kommunikationsverbindung kryptographisch geschützt bzw. verschlüsselt.

Das Verfahren umfasst einen zweiten Verfahrensschritt zum Aufbauen 120 einer Anwendungssitzung über die erste Kommunikationsverbindung beispielsweise mittels der Anwendungsmodule 22, 32 der Kommunikationspartner 20, 30.

Das Verfahren umfasst einen dritten Verfahrensschritt zum Speichern 130 eines ersten Verknüpfungsdatensatzes durch den ersten Kommunikationspartner und zum Speichern eines zweiten Verknüpfungsdatensatzes durch den zweiten Kommunikationspartner, wobei der erste Verknüpfungsdatensatz eine Verknüpfung des ersten Codes mit einem ersten anwendungsspezifischen Authentifikationsdatensatz des ersten Kommunikationspartners umfasst und der zweite Verknüpfungsdatensatz eine Verknüpfung des zweiten Codes mit einem zweiten anwendungsspezifischen Authentifikationsdatensatz des zweiten Kommunikationspartners umfasst. Die Verknüpfung kann beispielsweise mittels einer Prüfsumme oder einem Hashwert über den entsprechenden Code und dem entsprechenden anwendungsspezifischen Authentifikationsdatensatz erfolgen. Zudem können in den jeweiligen Verknüpfungsdatensatz anwendungsspezifische Daten wie eine Anwendungs-ID eingehen.

Der erste anwendungsspezifische Authentifikationsdatensatz kann beispielsweise ein Identifizierer des jeweiligen Kommunikationspartners (z. B. des ersten Kommunikationspartners und/oder des zweiten Kommunikationspartners) sein (z. B. eine alphanumerische Zeichenfolge). Der Identifizierer kann dabei als eindeutiger Identifizierer (UID) ausgebildet sein. Zusätzlich kann der erste anwendungsspezifische Authentifikationsdatensatz z. B. eine Nutzer-ID des Servicetechnikers und/oder eine Uhrzeit und/oder ein Passwort und/oder ein Nutzer-ID-spezifisches Passwort oder eine Kombination aus diesen Daten umfassen, um den ersten anwendungsspezifischen Authentifikationsdatensatz zu erzeugen.

Der zweite anwendungsspezifische Authentifikationsdatensatz kann beispielsweise ein Identifizierer des jeweiligen Kommunikationspartners (z. B. des ersten Kommunikationspartners und/oder des zweiten Kommunikationspartners) sein (z. B. eine alphanumerische Zeichenfolge). Der Identifizierer kann dabei als eindeutiger Identifizierer (UID) ausgebildet sein. Zusätzlich kann der zweite anwendungsspezifische Authentifikationsdatensatz z. B. eine Liste von erlaubten Nutzer-IDs von Servicetechnikern für den Zugriff (z. B. wenn eine Kommunikationsverbindung akzeptiert wird) auf den zweiten Kommunikationspartner und/oder Uhrzeiten zu denen ein solcher Zugriff erlaubt ist und/oder Passwörter (die z. B. den Nutzer-IDs zugeordnet sind) die für einen Zugriff auf den zweiten Kommunikationspartner erlaubt/erforderlich sind und/oder Berechtigungen, die Nutzer-IDs und/oder Passwörtern zugeordnet sind, oder eine Kombination aus diesen Daten umfassen, um den zweiten anwendungsspezifischen Authentifikationsdatensatz zu erzeugen.

Die jeweiligen Verknüpfungsdaten werden vorzugsweise für jeden Verbindungsaufbau erneut erzeugt und gespeichert.

Das Verfahren umfasst einen vierten Verfahrensschritt zum wechselseitigen Authentifizieren 140 des ersten Kommunikationspartners und des zweiten Kommunikationspartners mittels des ersten Verknüpfungsdatensatzes und des zweiten Verknüpfungsdatensatzes über die Anwendungssitzung. Hierzu kann ein Servicetechniker beispielsweise ein Passwort verwenden, das zusätzlich oder als Teil des ersten Verknüpfungsdatensatzes verwendet wird. Im Rahmen des wechselseitigen Authentifizierens kann beispielsweise der erste Kommunikationspartner erste Daten an den zweiten Kommunikationspartner senden. Alternativ oder zusätzlich sendet der zweite Kommunikationspartner zweite Daten an den ersten Kommunikationspartner. Die ersten Daten können beispielsweise den ersten Verknüpfungsdatensatz (z. B. über den ersten anwendungsspezifischen Authentifikationsdatensatz) und/oder das Passwort und/oder eine Benutzer-ID umfassen. Zusätzlich oder alternativ können die ersten Daten die Anwendungs-ID und/oder ein anwendungsspezifisches Passwort umfassen.

Die zweiten Daten können beispielsweise eine Bestätigung der Korrektheit des Passwortes oder eine Ablehnung des Passwortes wegen Ungültigkeit umfassen. Zudem können die zweiten Daten beispielsweise auch den zweiten Verknüpfungsdatensatz umfassen.

Bei dem Datenaustausch zwischen den Kommunikationspartnern kann es sich beispielsweise um ein Authentifikationsprotokoll handeln, bei dem die Passwörter bzw. der Verknüpfungsdatensatz nicht direkt ausgetauscht wird, sondern für kryptographische Operationen verwendet wird.

Die Verknüpfungsdatensätze fließen beispielsweise als Input in das Authentifikationsprotokoll ein und werden nicht direkt ausgetauscht. Der Verknüpfungsdatensatz stellt insofern vorzugsweise das symmetrische Geheimnis dar, mit dem die Authentifikation durchgeführt wird.

Das wechselseitige Authentifizieren 140 kann beispielsweise durch ein Authentifikationsprotokoll wie SRM (Secure Remote Passoword - RFC 2945) oder SCRAM realisiert werden.

Das Verfahren umfasst einen fünften Verfahrensschritt zum Bestätigen 150 der ersten Kommunikationsverbindung als kryptographisch geschützte und authentifizierte Kommunikationsverbindung, wenn das wechselseitige Authentifizieren erfolgreich ist. Das wechselseitige Authentifizieren ist beispielsweise dann erfolgreich, wenn der zweite Kommunikationspartner (z. B. das Feldgerät) das Passwort akzeptiert. Vorzugsweise wird beim Bestätigen die erste Kommunikationsverbindung als authentifizierte und kryptographisch geschützte Kommunikationsverbindung akzeptiert.

Hierzu empfängt das Feldgerät beispielsweise die ersten Daten und das zweite Anwendungsmodul wertet diese Daten aus und überprüft beispielsweise, ob das Passwort in Kombination mit der Nutzer-ID und dem ersten Verknüpfungsdatensatz für einen Zugriff auf dem Feldgerät zulässig bzw. korrekt ist. Alternativ oder zusätzlich wertet das Feldgerät beispielsweise mittels des zweiten Anwendungsmoduls 32 die Anwendungs-ID und/oder das anwendungsspezifische Passwort und/oder nutzerspezifische Passwort aus, um die wechselseitige Authentifizierung zu realisieren bzw. die Zulässigkeit des Zugriffs auf das Feldgerät durch den ersten Kommunikationspartner 20 zu prüfen.

Hierdurch kann sichergestellt werden, dass beispielsweise nur erlaubte/zugelassene bzw. freigegebene Geräte und/oder Anwendungen und/oder der Nutzer eine Verbindung mit dem Feldgerät aufbauen und Zugriff erhalten.

Die ersten Daten können auch weniger Informationen umfassen, beispielsweise nur den ersten Verknüpfungsdatensatz. Welche Daten die ersten bzw. zweiten Daten umfassen hängt dabei vom Anwendungsszenario ab und lassen sich ggf. leicht anpassen.

Sollte beispielsweise das Authentifizieren nicht erfolgreich sein, so wird dann vorzugsweise die erste Kommunikationsverbindung durch einen der Kommunikationspartner beendet. Vorzugsweise erfolgt dies durch den zweiten Kommunikationspartner, z. B. das Feldgerät.

Mit anderen Worten wird die erste Kommunikationsverbindung beispielsweise durch den zweiten Kommunikationspartner authentifiziert, sodass diese insbesondere als kryptographisch geschützte Kommunikationsverbindung akzeptiert wird.

Vorzugsweise wird also das Bestätigen durch den zweiten Kommunikationspartner realisiert. Noch bevorzugter wird das Bestätigen durch beide Kommunikationspartner durchgeführt, indem beispielsweise der erste Kommunikationspartner sich gegenüber dem zweiten Kommunikationspartner authentisiert. Wenn der zweite Kommunikationspartner den ersten Kommunikationspartner authentifiziert hat, übermittelt der zweite Kommunikationspartner Geräteinformationen (z. B. Prüfsumme über die Firmware des zweiten Kommunikationspartners, UID des zweiten Kommunikationspartners, digitale Zertifikate) an den ersten Kommunikationspartner und bestätigt die erste Kommunikationsverbindung. Diese Geräteinformationen können dann beispielsweise durch den ersten Kommunikationspartner überprüft werden. Stellt der erste Kommunikationspartner die Korrektheit der Geräteinformationen fest, bestätigt dieser ebenfalls die erste Kommunikationsverbindung. Vorzugsweise wenn der erste und der zweite Kommunikationspartner die erste Kommunikationsverbindung bestätigt haben, wird diese als kryptographisch geschützte und authentifizierte Kommunikationsverbindung bestätigt bzw. akzeptiert.

Ist die kryptographisch geschützte Kommunikationsverbindung etabliert (die Authentifizierung war erfolgreich), werden in einem sechsten Verfahrensschritt 160 Daten (z. B. Nutzerdaten oder Servicedaten) zwischen den Anwendungsmodulen 22, 32 oder den Kommunikationspartnern über die kryptographisch geschützte Kommunikationsverbindung ausgetauscht.

Mit anderen Worten kann mit der Erfindung beispielsweise eine Bluetooth-Verbindung ohne Benutzerinterkation oder Austausch von Informationen über andere Kommunikationsschnittstellen zum Benutzer realisiert werden und dabei dennoch sichergestellt werden, dass die beiden Bluetooth-Geräte (also der erste Kommunikationspartner und der zweite Kommunikationspartner) gegenseitig authentifiziert sind.

Dabei wird insbesondere auf Basis des Pairing-Mechanismus "Numeric Comparison" ein modifizierter Verbindungsaufbau realisiert. Insbesondere wird dabei auf die Anzeige der Ziffern (z. B. der erste Code und der zweite Code) verzichtet, so dass dieser Verbindungsaufbau keine Benutzerinteraktion am Feldgerät erfordert.

Danach erfolgt beispielsweise über den etablierten Bluetooth-Kanal (z. B. die erste Kommunikationsverbindung) eine anwendungsspezifische Authentifikation, z. B. auf Basis eines Benutzerpasswortes. Zur Vermeidung eines Man-in-the-Middle oder ID-Spoofing Angriffen, werden Informationen aus dem Bluetooth-Verbindungsaufbau (Ziffern des Pairing Mechanismus Numeric Comparison - also die jeweiligen Codes der Kommunikationspartner) mit Authentifikationsinformationen (die z. B. in dem ersten und/oder zweiten anwendungsspezifischen Authentifikationsdatensatz gespeichert sind) der Anwendung verknüpft, so dass bei einer erfolgreichen Authentifikation sicher gestellt ist, dass der Endpunkt der Bluetooth-Verbindung identisch mit dem Authentifizierungsendpunkt der Anwendung ist.

Durch das Verfahren wird insbesondere die Bluetooth-Verbindung somit nachträglich durch die Anwendungen (also die Anwendungsmodule 22, 32) authentifiziert. Der nachfolgende Datenaustausch erfolgt regulär über die gesicherte und nachträglich authentifizierte Bluetooth-Verbindung.

In der nachfolgenden Variante des Ausführungsbeispiels ist ein weiterer möglicher Verfahrensablauf erläutert.

Zunächst wird eine Bluetooth-Verbindung mit dem Pairing Mechanismus "Numeric Comparison" aufgebaut.

Danach werden die entsprechenden Codes (also Va bzw. Vb in der Erläuterung zum Numeric Comparison Protokoll im Bluetooth-Standard bezeichnet) zur visuellen Kontrolle durch die Anwendung aus einem Speichermodul ausgelesen (z. B. aus dem BLE-Stack), aber nicht angezeigt. Va entspricht dabei beispielsweise dem ersten Code und Vb entspricht dabei beispielsweise dem zweiten Code.

Danach werden entsprechend Va und Vb mit den entsprechenden Gerätemerkmalen der Kommunikationspartner und der applikationsspezifischen Pin, z. B. ein Passwort, und/oder dem entsprechenden anwendungsspezifischen Authentifikationsdatensatz verknüpft. Hierbei werden dann jeweils für die Kommunikationspartner der erste Verknüpfungsdatensatz und der zweite Verknüpfungsdatensatz berechnet.

Im nächsten Schritt wird eine Anwendungssitzung (z. B. Applikationssitzung) über den gesicherten (aber nicht authentifizierten) Bluetooth-Kanal aufgebaut.

Danach wird ein wechselseitiges Authentifikationsprotokoll auf Basis der Verknüpfungsdatensätze ausgeführt.

Dabei werden die entsprechenden Informationen beispielsweise jeweils durch die Kommunikationspartner an den Bluetooth-Kanal (also die erste Kommunikationsverbindung) gebunden - also diesem fest zugeordnet.

Durch eine solche Kanalbindung der Ende-zu-Ende Authentifizierung mit dem Bluetooth Kanal werden insbesondere alle nachfolgenden Daten im Kontext der authentifizierten Partner ausgetauscht, ohne dass ein Dritter Daten auf der Kommunikationsstrecke lesen oder manipulieren kann. Die Daten werden beispielsweise mit den im ersten Verfahrensschritt ausgehandelten Bluetooth-Schlüsseln geschützt.

In einer weiteren Variante kann das Ergebnis des Authentisierungsprotokolls bzw. des wechselseitigen Authentifizierens zusammen mit dem zugehörigen Bluetooth Link Key abgespeichert werden. Bei einem erneuten Verbindungsaufbau kann dann, unter Rückgriff auf einen bereits existierenden Link-Key, entschieden werden, ob der Link bereits erfolgreich authentisiert wurde. In diesem Fall fließt in das Authentifikationsprotokoll nicht die Information Va oder Vb (also die entsprechenden Codes der Kommunikationspartner) ein, sondern ein Geheimnis aus dem vorher durchgeführten Verbindungsaufbau (z. B. Hash des Link-Keys). Ist ein Link-Key vorhanden, der aber im Nachgang nicht erfolgreich authentifiziert werden konnte, wird kein Authentifikationsprotokoll bzw. wechselseitige Authentifizierung durchgeführt, sondern es wird ein erneutes Pairing entsprechend des beschriebenen Ablaufs erzwungen.

In einer weiteren Variante kann durch eine Nutzung unterschiedlicher Pins (z. B. Passwörter für einen Nutzer oder unterschiedliche Passwörter für die Anwendung), die beispielsweise der erste anwendungsspezifische Authentifikationsdatensatz (z. B. zum Übermitteln) bzw. der zweite anwendungsspezifische Authentifikationsdatensatz (z. B. zum Verifizieren) umfasst, ein Berechtigungskonzept umgesetzt werden. Der Umfang der erlaubten Operationen wird anhand einer Benutzer-ID oder Rolle und der Pin überprüft. Ein Angreifer, der die reguläre Pin einer Berechtigungsstufe eines Feldgeräte kennt, kann nicht über einen Man-in-the-Middle Angriff ein erhöhtes Berechtigungsniveau erlangen.

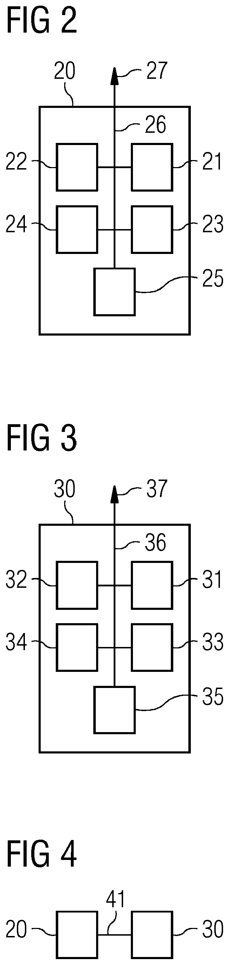

Die Fig. 2 zeigt ein zweites Ausführungsbeispiel der Erfindung als erster Kommunikationspartner.

Der erste Kommunikationspartner 20 umfasst ein erstes Kommunikationsmodul 21 (z. B. ein Bluetooth-Modul), ein erstes Anwendungsmodul 22, ein erstes Speichermodul 23, ein erstes Authentifizierungsmodul 24 und ein erstes Sicherheitsmodul 25, die über einen ersten Bus 26 kommunikativ miteinander verbunden sind. Über den Bus 26 ist beispielsweise auch eine Kommunikationsschnittstelle 27 (z. B. eine Antenne) angebunden.

Die der erste Kommunikationspartner kann beispielsweise zusätzlich noch eine weitere oder mehrere weitere Komponente/n umfassen, wie beispielsweise einen Prozessor, eine Speichereinheit, ein Eingabegerät, insbesondere eine Computertastatur oder eine Computermaus, und ein Anzeigegerät (z. B. einen Monitor). Der Prozessor kann beispielsweise mehrere weitere Prozessoren umfassen, wobei beispielsweise die weiteren Prozessoren jeweils eines oder mehrere der Module realisieren. Alternativ realisiert der Prozessor insbesondere alle Module des Ausführungsbeispiels. Die weitere/n Komponente/n können beispielsweise ebenfalls über den Bus 26 miteinander kommunikativ verbunden sein.

Bei dem ersten Kommunikationspartner 20 kann es sich beispielsweise um einen Tabletcomputer, ein Smartphone, ein Laptop oder ein Industrie-Laptop handeln.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Das erste Kommunikationsmodul 21 ist zum Aufbauen einer ersten Kommunikationsverbindung mit einem zweiten Kommunikationspartner eigerichtet, wobei der erste Kommunikationspartner einen ersten Code erzeugt.

Das erste Kommunikationsmodul 21 kann beispielsweise mittels des Prozessors, der Speichereinheit, einem Bluetooth-Modul und einer ersten Programmkomponente realisiert werden, wobei beispielsweise durch ein Ausführen von Programmbefehlen der ersten Programmkomponente die erste Kommunikationsverbindung aufgebaut wird.

Alternativ zum Bluetooth-Modul kann beispielsweise auch ein W-LAN Modul eingesetzt werden.

Das erste Speichermodul 23 ist zum Speichern eines ersten Verknüpfungsdatensatzes eingerichtet, wobei der erste Verknüpfungsdatensatz eine Verknüpfung des ersten Codes mit einem ersten anwendungsspezifischen Authentifikationsdatensatz des ersten Kommunikationspartners umfasst.

Das erste Speichermodul 23 kann beispielsweise mittels des Prozessors, der Speichereinheit und einer zweiten Programmkomponente implementiert oder realisiert werden, wobei beispielsweise durch ein Ausführen von Programmbefehlen der zweiten Programmkomponente der Prozessor derart konfiguriert wird oder durch die Programmbefehle der Prozessor derart konfiguriert ist, dass die Verknüpfungsdaten erzeugt werden.

Das erste Anwendungsmodul 22 ist zum Aufbauen einer Anwendungssitzung über die erste Kommunikationsverbindung eingerichtet.

Das erste Anwendungsmodul 22 kann beispielsweise mittels des Prozessors, der Speichereinheit und einer dritten Programmkomponente implementiert oder realisiert werden, wobei beispielsweise durch ein Ausführen von Programmbefehlen der dritten Programmkomponente der Prozessor derart konfiguriert wird oder durch die Programmbefehle der Prozessor derart konfiguriert ist, dass die Anwendungssitzung aufgebaut wird.

Das Anwendungsmodul 22 kann dabei beispielsweise eine Wartungsapplikation für einen zweiten Kommunikationspartner (z. B. ein Feldgerät) sein.

Das erste Authentifizierungsmodul 24 ist zum wechselseitigen Authentifizieren des ersten Kommunikationspartners und des zweiten Kommunikationspartners mittels des ersten Verknüpfungsdatensatzes eingerichtet.

Vorzugsweise authentisiert sich der erste Kommunikationspartner beim zweiten Kommunikationspartner und der zweiten Kommunikationspartner authentifiziert den ersten Kommunikationspartner.

Das erste Authentifizierungsmodul 24 kann beispielsweise mittels des Prozessors, der Speichereinheit und einer vierten Programmkomponente implementiert oder realisiert werden, wobei beispielsweise durch ein Ausführen von Programmbefehlen der vierten Programmkomponente der Prozessor derart konfiguriert wird oder durch die Programmbefehle der Prozessor derart konfiguriert ist, dass die Authentifizierung durchgeführt wird.

De vierte Programmkomponente kann beispielsweise eine Programmbibliothek sein, die das Authentifizierungsprotokoll SRP oder SCRAM realisieren.

Das erste Sicherheitsmodul 25 ist zum Bestätigen der ersten Kommunikationsverbindung als kryptographisch geschützte Kommunikationsverbindung durch die Kommunikationspartner eingerichtet, wenn das wechselseitige Authentifizieren erfolgreich ist.

Vorzugsweise wird das Bestätigen durch den zweiten Kommunikationspartner realisiert. Noch bevorzugter wird das Bestätigen durch beide Kommunikationspartner durchgeführt, indem beispielsweise der erste Kommunikationspartner sich gegenüber dem zweiten Kommunikationspartner authentisiert. Wenn der zweite Kommunikationspartner den ersten Kommunikationspartner authentifiziert hat, übermittelt der zweite Kommunikationspartner Geräteinformationen (z. B. Prüfsumme über die Firmware des zweiten Kommunikationspartners, UID des zweiten Kommunikationspartners, digitale Zertifikate) an den ersten Kommunikationspartner und bestätigt die erste Kommunikationsverbindung. Diese Geräteinformationen können dann beispielsweise durch den ersten Kommunikationspartner überprüft werden. Stellt der erste Kommunikationspartner die Korrektheit der Geräteinformationen fest, bestätigt dieser ebenfalls die erste Kommunikationsverbindung. Vorzugsweise wenn der erste und der zweite Kommunikationspartner die erste Kommunikationsverbindung bestätigt haben, wird diese als kryptographisch geschützte und authentifizierte Kommunikationsverbindung bestätigt bzw. akzeptiert.

Das erste Sicherheitsmodul 25 kann beispielsweise mittels des Prozessors, der Speichereinheit und einer fünften Programmkomponente implementiert oder realisiert werden, wobei beispielsweise durch ein Ausführen von Programmbefehlen der fünften Programmkomponente der Prozessor derart konfiguriert wird oder durch die Programmbefehle der Prozessor derart konfiguriert ist, dass die erste Kommunikationsverbindung als kryptographisch geschützte Kommunikationsverbindung bestätigt wird.

Das Ausführen der Programmbefehle der jeweiligen Module kann hierbei beispielsweise mittels des Prozessors selbst und/oder mittels einer Initialisierungskomponente, beispielsweise ein Lader (engl. loader) oder einer Konfigurationskomponente, erfolgen.

Die Fig. 3 zeigt ein drittes Ausführungsbeispiel der Erfindung als zweiter Kommunikationspartner.

Der zweite Kommunikationspartner 30 umfasst ein zweites Kommunikationsmodul 31 (z. B. ein Bluetooth-Modul), ein zweites Anwendungsmodul 32, ein zweites Speichermodul 33, ein zweites Authentifizierungsmodul 34 und ein zweites Sicherheitsmodul 35, die über einen weiten Bus 36 kommunikativ miteinander verbunden sind. Über den Bus 36 ist beispielsweise auch eine Kommunikationsschnittstelle 37 (z. B. eine Antenne) angebunden.

Die der zweite Kommunikationspartner 30 kann beispielsweise zusätzlich noch eine weitere oder mehrere weitere Komponente/n umfassen, wie beispielsweise einen Prozessor, eine Speichereinheit, ein Eingabegerät, insbesondere eine Computertastatur oder eine Computermaus, und ein Anzeigegerät (z. B. einen Monitor). Der Prozessor kann beispielsweise mehrere weitere Prozessoren umfassen, wobei beispielsweise die weiteren Prozessoren jeweils eines oder mehrere der Module realisieren. Alternativ realisiert der Prozessor insbesondere alle Module des Ausführungsbeispiels. Die weitere/n Komponente/n können beispielsweise ebenfalls über den Bus 36 miteinander kommunikativ verbunden sein.

Bei dem zweiten Kommunikationspartner 30 kann es sich beispielsweise um ein Feldgerät, eine Werkzeugmaschine oder ein Fertigungsroboter handeln.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Das zweite Kommunikationsmodul 31 ist zum Aufbauen einer ersten Kommunikationsverbindung mit einem ersten Kommunikationspartner eigerichtet, wobei der zweite Kommunikationspartner einen zweiten Code erzeugt.

Das zweite Kommunikationsmodul 31 kann beispielsweise mittels des Prozessors, der Speichereinheit, eines Bluetooth-Moduls und einer ersten Programmkomponente realisiert werden, wobei beispielsweise durch ein Ausführen von Programmbefehlen der ersten Programmkomponente die erste Kommunikationsverbindung aufgebaut wird.

Alternativ zum Bluetooth-Modul kann beispielsweise auch ein W-LAN Modul eingesetzt werden.

Das zweite Speichermodul 33 ist zum Speichern eines zweiten Verknüpfungsdatensatzes eingerichtet, wobei der zweite Verknüpfungsdatensatz eine Verknüpfung des zweiten Codes mit einem zweiten anwendungsspezifischen Authentifikationsdatensatz des zweiten Kommunikationspartners umfasst.

Das erste Speichermodul 33 kann beispielsweise mittels des Prozessors, der Speichereinheit und einer zweiten Programmkomponente implementiert oder realisiert werden, wobei beispielsweise durch ein Ausführen von Programmbefehlen der zweiten Programmkomponente der Prozessor derart konfiguriert wird oder durch die Programmbefehle der Prozessor derart konfiguriert ist, dass die Verknüpfungsdaten erzeugt werden.

Das zweite Anwendungsmodul 32 ist zum Aufbauen einer Anwendungssitzung über die erste Kommunikationsverbindung eingerichtet.

Das zweite Anwendungsmodul 32 kann beispielsweise mittels des Prozessors, der Speichereinheit und einer dritten Programmkomponente implementiert oder realisiert werden, wobei beispielsweise durch ein Ausführen von Programmbefehlen der dritten Programmkomponente der Prozessor derart konfiguriert wird oder durch die Programmbefehle der Prozessor derart konfiguriert ist, dass die Anwendungssitzung aufgebaut wird.

Das zweite Anwendungsmodul 32 kann dabei beispielsweise eine Firmware des zweiten Feldgerätes (z. B. eine Feldgerätefirmware) sein.

Das zweite Authentifizierungsmodul 34 ist zum wechselseitigen Authentifizieren des ersten Kommunikationspartners und des zweiten Kommunikationspartners mittels des zweiten Verknüpfungsdatensatzes eingerichtet.

Das zweite Authentifizierungsmodul 34 kann beispielsweise mittels des Prozessors, der Speichereinheit und einer vierten Programmkomponente implementiert oder realisiert werden, wobei beispielsweise durch ein Ausführen von Programmbefehlen der vierten Programmkomponente der Prozessor derart konfiguriert wird oder durch die Programmbefehle der Prozessor derart konfiguriert ist, dass die Authentifizierung durchgeführt wird.

Die vierte Programmkomponente kann beispielsweise eine Programmbibliothek sein, die das Authentifizierungsprotokoll SRP oder SCRAM realisieren.

Vorzugsweise authentisiert sich der erste Kommunikationspartner beim zweiten Kommunikationspartner und der zweiten Kommunikationspartner authentifiziert den ersten Kommunikationspartner.

Das zweite Sicherheitsmodul 35 ist zum Bestätigen der ersten Kommunikationsverbindung als kryptographisch geschützte Kommunikationsverbindung durch die Kommunikationspartner eingerichtet, wenn das wechselseitige Authentifizieren erfolgreich ist.

Vorzugsweise wird das Bestätigen durch den zweiten Kommunikationspartner realisiert. Noch bevorzugter wird das Bestätigen durch beide Kommunikationspartner durchgeführt, indem beispielsweise der erste Kommunikationspartner sich gegenüber dem zweiten Kommunikationspartner authentisiert. Wenn der zweite Kommunikationspartner den ersten Kommunikationspartner authentifiziert hat, übermittelt der zweite Kommunikationspartner Geräteinformationen (z. B. Prüfsumme über die Firmware des zweiten Kommunikationspartners, UID des zweiten Kommunikationspartners, digitale Zertifikate) an den ersten Kommunikationspartner und bestätigt die erste Kommunikationsverbindung. Diese Geräteinformationen können dann beispielsweise durch den ersten Kommunikationspartner überprüft werden. Stellt der erste Kommunikationspartner die Korrektheit der Geräteinformationen fest, bestätigt dieser ebenfalls die erste Kommunikationsverbindung. Vorzugsweise wenn der erste und der zweite Kommunikationspartner die erste Kommunikationsverbindung bestätigt haben, wird diese als kryptographisch geschützte und authentifizierte Kommunikationsverbindung bestätigt bzw. akzeptiert.

Das zweite Sicherheitsmodul 35 kann beispielsweise mittels des Prozessors, der Speichereinheit und einer fünften Programmkomponente implementiert oder realisiert werden, wobei beispielsweise durch ein Ausführen von Programmbefehlen der fünften Programmkomponente der Prozessor derart konfiguriert wird oder durch die Programmbefehle der Prozessor derart konfiguriert ist, dass die erste Kommunikationsverbindung als kryptographisch geschützte Kommunikationsverbindung bestätigt wird.

Das Ausführen der Programmbefehle der jeweiligen Module kann hierbei beispielsweise mittels des Prozessors selbst und/oder mittels einer Initialisierungskomponente, beispielsweise ein Lader (engl. loader) oder einer Konfigurationskomponente, erfolgen.

Die Fig. 4 zeigt ein viertes Ausführungsbeispiel der Erfindung als System.

Im Einzelnen zeigt Fig. 4 die in Fig. 2 und Fig. 3 dargestellte Kommunikationspartner, die über eine drahtlose Kommunikationsverbindung 41 (z. B. eine Bluetooth-Verbindung) mit einander kommunikativ in Verbindung stehen. Das System, das den ersten Kommunikationspartner 20 und den zweiten Kommunikationspartner 30 umfasst, realisiert vorzugweise das in Fig. 1 erläuterte Verfahren oder eines seiner Ausführungsbeispiele oder Varianten.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Verfahren zum rechnergestützten Erzeugen einer kryptographisch geschützten Kommunikationsverbindung, insbesondere eines drahtlosen Kommunikationskanals wie Bluetooth, zwischen einem ersten Kommunikationspartner und einem zweiten Kommunikationspartner mit folgenden Verfahrensschritten:
- Aufbauen (110) einer ersten Kommunikationsverbindung zwischen dem ersten Kommunikationspartner und dem zweiten Kommunikationspartner, wobei
- der erste Kommunikationspartner einen ersten Code erzeugt und der zweite Kommunikationspartner einen zweiten Code erzeugt;
- Aufbauen (120) einer Anwendungssitzung über die erste Kommunikationsverbindung;
- Erzeugen und Speichern (130) eines ersten Verknüpfungsdatensatzes durch den ersten Kommunikationspartner und Erzeugen und Speichern eines zweiten Verknüpfungsdatensatzes durch den zweiten Kommunikationspartner, wobei
- der erste Verknüpfungsdatensatz eine Verknüpfung des ersten Codes mit einem ersten anwendungsspezifischen Authentifikationsdatensatz des ersten Kommunikationspartners umfasst,
- der zweite Verknüpfungsdatensatz eine Verknüpfung des zweiten Codes mit einem zweiten anwendungsspezifischen Authentifikationsdatensatz des zweiten Kommunikationspartners umfasst;
- wechselseitiges Authentifizieren (140) des ersten Kommunikationspartners und des zweiten Kommunikationspartners mittels des ersten Verknüpfungsdatensatzes und des zweiten Verknüpfungsdatensatzes über die Anwendungssitzung;
- Bestätigen (150) der ersten Kommunikationsverbindung als kryptographisch geschützte und authentifizierte Kommunikationsverbindung, wenn das wechselseitige Authentifizieren erfolgreich ist.

2. Verfahren nach Anspruch 1, wobei die jeweiligen Verknüpfungsdaten durch den jeweiligen Kommunikationspartner gespeichert werden, um insbesondere einen erneuten Verbindungsaufbau zu beschleunigen.

3. Verfahren nach einem der vorhergehenden Ansprüche, wobei für einen erneuten Verbindungsaufbau über die geschützte Kommunikationsverbindung weiteres Schlüsselmaterial ausgetauscht wird.

4. Verfahren nach einem der vorhergehenden Ansprüche, wobei das jeweilige Verknüpfen mittels einer Prüfsumme über den jeweiligen Code und dem jeweiligen Authentifikationsdatensatz des jeweiligen Kommunikationspartners realisiert wird.

5. Verfahren nach einem der vorhergehenden Ansprüche, wobei die Codes für die Kommunikationspartner identisch sind.

6. Verfahren nach einem der vorhergehenden Ansprüche, wobei zum wechselseitigen Authentifizieren ein Authentifizierungsprotokoll wie SRP oder SCRAM verwendet wird.

7. Verfahren nach einem der vorhergehenden Ansprüche, wobei beim Aufbauen der ersten Kommunikationsverbindung kryptographisches Schlüsselmaterial austauscht wird, um die erste Kommunikationsverbindung zu verschlüsseln.

8. Verfahren nach einem der vorhergehenden Ansprüche, wobei die Codes für die Kommunikationspartner unterschiedlich sind.

9. Verfahren nach einem der vorhergehenden Ansprüche, wobei mit einem jeweiligen Authentifikationsdatensatz eine Berechtigungsstufe gegenüber einem der Kommunikationspartner zugeordnet wird.

10. Verfahren nach einem der vorhergehenden Ansprüche, wobei
- der zweite Kommunikationspartner ein Feldgerät ist und der erste Kommunikationspartner ein Wartungsgerät für das Feldgerät ist,
- wobei insbesondere mittels der Authentifikationsdatensätze eine Berechtigungsstufe gegenüber dem zweiten Kommunikationspartner freigegeben wird.

11. Ersten Kommunikationspartner aufweisend:
- ein erstes Kommunikationsmodul (21) zum Aufbauen einer ersten Kommunikationsverbindung mit einem zweiten Kommunikationspartner, wobei
- der erste Kommunikationspartner einen ersten Code erzeugt;
- ein erstes Anwendungsmodul (22) zum Aufbauen einer Anwendungssitzung über die erste Kommunikationsverbindung;
- ein erstes Speichermodul (23) zum Speichern eines ersten Verknüpfungsdatensatzes, wobei
- der erste Verknüpfungsdatensatz eine Verknüpfung des ersten Codes mit einem ersten anwendungsspezifischen Authentifikationsdatensatz des ersten Kommunikationspartners umfasst,
- ein erstes Authentifizierungsmodul (24) zum wechselseitigen Authentifizieren des ersten Kommunikationspartners und des zweiten Kommunikationspartners mittels des ersten Verknüpfungsdatensatzes;
- ein erstes Sicherheitsmodul (25) zum Bestätigen der ersten Kommunikationsverbindung als kryptographisch geschützte und authentifizierte Kommunikationsverbindung durch die Kommunikationspartner, wenn das wechselseitige Authentifizieren erfolgreich ist.

12. Zweiter Kommunikationspartner aufweisend:
- ein zweites Kommunikationsmodul zum Aufbauen einer ersten Kommunikationsverbindung mit einem ersten Kommunikationspartner, wobei
- der zweite Kommunikationspartner einen zweiten Code erzeugt;
- ein zweites Anwendungsmodul zum Aufbauen einer Anwendungssitzung über die erste Kommunikationsverbindung;
- ein zweites Speichermodul zum Speichern eines zweiten Verknüpfungsdatensatzes, wobei
- der zweite Verknüpfungsdatensatz eine Verknüpfung des zweite Codes mit einem zweiten anwendungsspezifischen Authentifikationsdatensatz des zweiten Kommunikationspartners umfasst,
- ein zweites Authentifizierungsmodul zum wechselseitigen Authentifizieren des ersten Kommunikationspartners und des zweiten Kommunikationspartners mittels des zweiten Verknüpfungsdatensatzes;
- ein zweites Sicherheitsmodul zum Bestätigen der ersten Kommunikationsverbindung als kryptographisch geschützte und authentifizierte Kommunikationsverbindung durch die Kommunikationspartner, wenn das wechselseitige Authentifizieren erfolgreich ist.

13. System zum rechnergestützten Erzeugen einer kryptographisch geschützten Kommunikationsverbindung, insbesondere einer drahtlosen Kommunikationsverbindung wie Bluetooth, zwischen einem ersten Kommunikationspartner und einem zweiten Kommunikationspartner aufweisend:
- einen ersten Kommunikationspartner nach Anspruch 11
- einen zweiten Kommunikationspartner, nach Anspruch 12
- eine Netzwerkverbindung zwischen dem ersten Kommunikationspartner und dem zweiten Kommunikationspartner.

14. Computerprogrammprodukt mit Programmbefehlen zur Durchführung der Verfahren nach einem der Ansprüche 1 - 10.

15. Computerprogrammprodukt mit Programmbefehlen für ein Erstellungsgerät, das mittels der Programmbefehle konfiguriert wird, die einen der Kommunikationspartner nach Anspruch 11 und/oder 12 zu erstellen und/oder das System nach Anspruch 13 zu erstellen.

16. Bereitstellungsvorrichtung für das Computerprogrammprodukt nach Anspruch 14 und/oder 15, wobei die Bereitstellungsvorrichtung das Computerprogrammprodukt speichert und/oder bereitstellt.
